# EUROPEAN PATENT SPECIFICATION

(11) **EP 2 386 380 B1**
(45) Date of publication and mention of the grant of the patent: **16.05.2018**
(21) Application number: 11460016.6
(22) Date of filing: 08.04.2011
(51) Int. Cl.: B23K 37/02, B23K 10/00, B26F 3/00, B23K 28/02

(54) **Cutting machine**
Schneidemaschine
Découpeuse

(30) Priority: 07.05.2010 PL 39116510
(43) Date of publication of application: 16.11.2011
(73) Proprietor: Eckert, Tadeusz, 59-216 Kunice (PL)
(72) Inventor: Eckert, Tadeusz, 59-216 Kunice (PL)
(74) Representative: Budzinski, Slawomir

(56) References cited:
- EP-A2- 1 004 397
- JP-A- H0 453 699
- JP-A- 2002 144 296
- JP-A- 2010 064 210
- US-A1- 2009 184 040
- SOITAAB IMPIANTI S R L: "WATER CUTTING SOLUTIONS. REV. 1", 20080101, 1 January 2008 (2008-01-01), pages 1-6, XP003035097,

## Description

The subject matter of the invention is a portal cutter according to the preamble of claim 1, as for example known from JP 2002 144296 A. Such a cutter is designed to make pieces from different materials; it is equipped with two computer numerical controlled tools for making it possible to create one piece using water or plasma cutting technology.

The conventional CNC portal cutting machine with a waterjet head, containing two carriages slidably mounted on two longitudinal tracks positioned parallel to each other, in which on the portal a tool rest carriage is mounted slidably on the crosswise track for attaching the waterjet head. The cutter is fitted with the portal's drive unit - designed for moving it along the longitudinal track; the tool rest carriage's drive unit - designed for moving it along the crosswise track; the waterjet head's drive unit - designed for moving it crosswise to the axis of the portal. In addition, the cutting machine is equipped with a work table mounted in a tub designed for collecting water and abrasive used up in the process of cutting, as well as a technological system designed for creating and shaping the stream of water used directly in the cutting process. The cutting machine is fitted with a CNC controller designed for controlling all operations, which take place in the cutting process. The work table - designed for placing the material being cut - is made of a slatted grille located at the top of the tub.
The CNC portal cutting machine with a plasma cutting torch contains two carriages slidably mounted on two longitudinal tracks positioned parallel to each other. On the portal, a tool rest carriage is mounted slidably on the crosswise track for attaching the plasma cutting torch. The cutting machine is fitted with the portal's drive unit - designed for moving it along the longitudinal track; the tool rest carriage's drive unit - designed for moving it along the crosswise track; the plasma cutting torch's drive unit - designed for moving it crosswise to the axis of the portal. In addition, the cutting machine is equipped with a work table and a technological system designed for creating and shaping plasma used directly in the process of cutting. The cutting machine is fitted with a CNC controller designed for controlling all operations, which take place in the cutting process.

The disadvantage of water cutting technology is that the cutting process is slow, it consumes large amounts of energy, and the disadvantage of the plasma cutting technology is that it cuts only electrically conductive material; furthermore, heat affected zone occurs in the process, a piece being cut out requires finishing, which, in many cases, eliminates the possibility of using this method. In practice, it is often required to make two pieces using both technologies; it is then necessary to use two different machines.

The portal cutting machine, as per the present invention, includes two carriages slidably mounted on two longitudinal tracks positioned parallel to each other. On the portal, two tool rest carriages are slidably mounted on the crosswise track: one is designed for fixing the waterjet head, while the other one for fixing the plasma cutting torch. The cutting machine is fitted with: the portal's drive unit - designed for moving it along the longitudinal track, the tool rest carriages' drive units designed for moving them along the crosswise track, the tool heads' drive unit, separate for each of them designed for moving them crosswise to the axis of the portal. In addition, the cutting machine is equipped with a tub, in which the work table and two technological systems are located - one designed for creating and shape the stream of water, the other one for creating and shaping plasma, i.e., the media used directly for cutting. The work table, as per the invention, consists of: the grid, on which the material intended for processing is stored, a grid for fine pieces - it protects them from falling to the bottom of the tub. The tub is designed for storing water and abrasives used up in the cutting process; it is an open top tank consisting of a main tank - located underneath the workspace and a separator - which is the next part of the tank - along the cutting machine behind its workspace. The width of the main tank is similar to the free space between the longitudinal tracks and its length is similar to the length of the longitudinal tracks. The upper edges of the front wall and side walls are at the same height, while the bottom of the main tank is flat, preferably located horizontally, and the bottom separator, which is an extension of the bottom of the main tank, ascends gently upwards. The separator is limited by the sloping bottom of the separator, which rises above the upper edge of the main tank walls and the side walls of the separator, which are an extension of the side walls of the main tank. The upper edges of the side walls of the separator are parallel to the bottom of the separator. A screen, which forms the first stage of separation, is mounted in the bottom of the separator, above the upper edges of the walls of the main tank. The separator's throat in the form of a rectangular separator tube with walls facing downwards is placed above the screen. Preferably, the separator's outlet is fitted with an adjustable lid designed for directing the waste outside the separator - this is the second stage of separation. Preferably, the lid of the throat is in the form of a screen, which allows filtration of water before the waste is directed outside. This allows easy cleaning of the bottom of the bath, and allows access to the fine pieces that will not be retained by a slatted grille or grid of the table. The tub is equipped with a cleaning device and a water level control device. The cleaning device consists of scraping system, which is designed for extracting solid waste from the bottom of the tub and a separation system designed for separating solid waste into two fractions with different granularity. The scraping system includes: a scraping strip, which is formed by a series of scraper elements fixed on longitudinal chain guides, lower return wheels located in front of the tub, lower intermediate wheels located at the back of the tub before the separator, upper return wheels located over the throat of the separator, upper intermediate wheels located at the back of the tub over the intermediate bottom wheels. All wheels are mounted on the axles in the side walls of the bath. Furthermore, the scraping system is equipped with the conventional drive unit. The scraping strip is a closed loop, which is routed from the return wheels along the bottom of the main tank to the lower intermediate wheels, and then along the bottom of the separator to the upper return wheels, on which the scraping strip changes direction and is routed over the surface of the separator's bottom to the upper intermediate wheels, where it returns over the bottom of the main tank to the lower return wheels. The water level control device is a conventional system with the controller, which enables the selection of the force of the water inflow/outflow stream into the tub, so that the water level in the tub is maintained at a height selected for the currently ongoing technological process. This solution allows, depending on the needs, the workpiece to be maintained above the water, on the surface or underneath it. The cutting machine is fitted with a CNC controller - for controlling all operations, which take place in the process of cutting every piece - i.e. the movement of tools and cutting parameters. The control is based on the codes generated in the appropriate CAM program, based on the type of projects of the constructed pieces in the CAD software-based projects that indicate the shapes and cutting lines, which are to be made, as well as the type of the cutting tool.

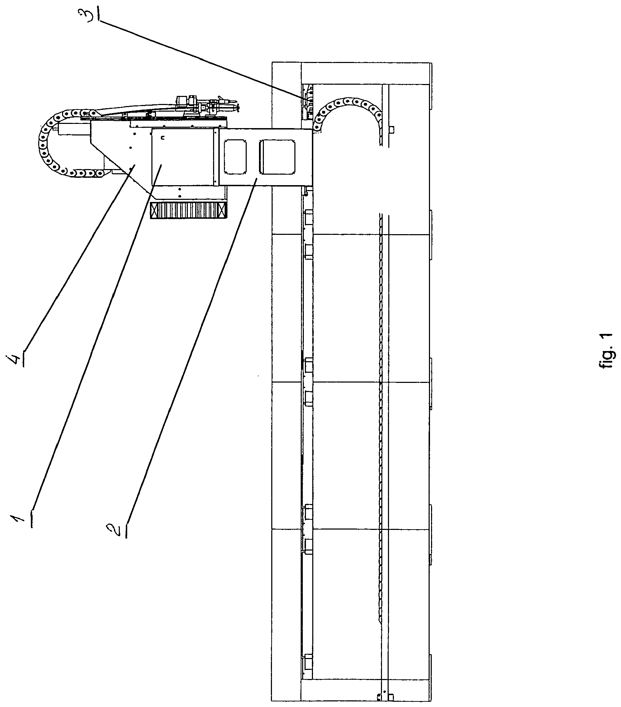

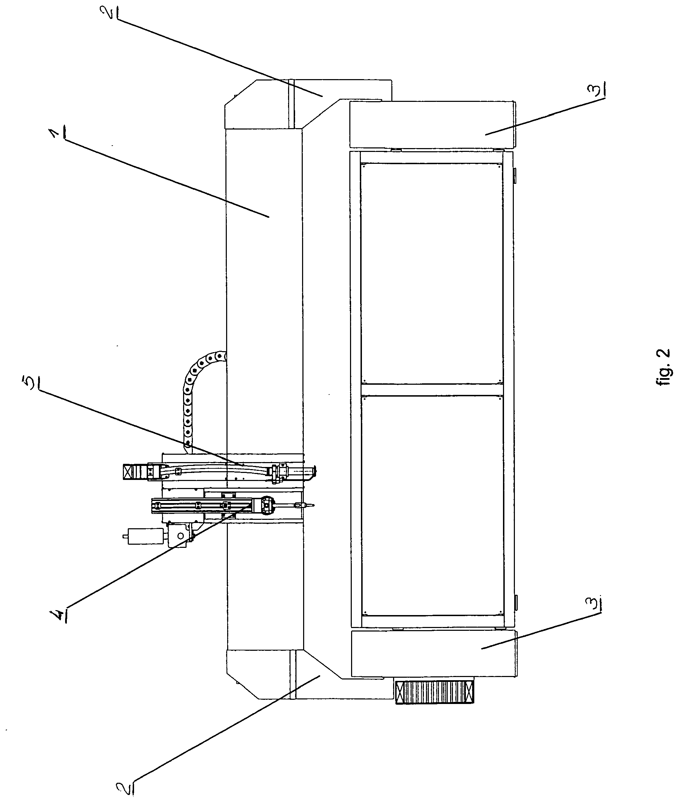

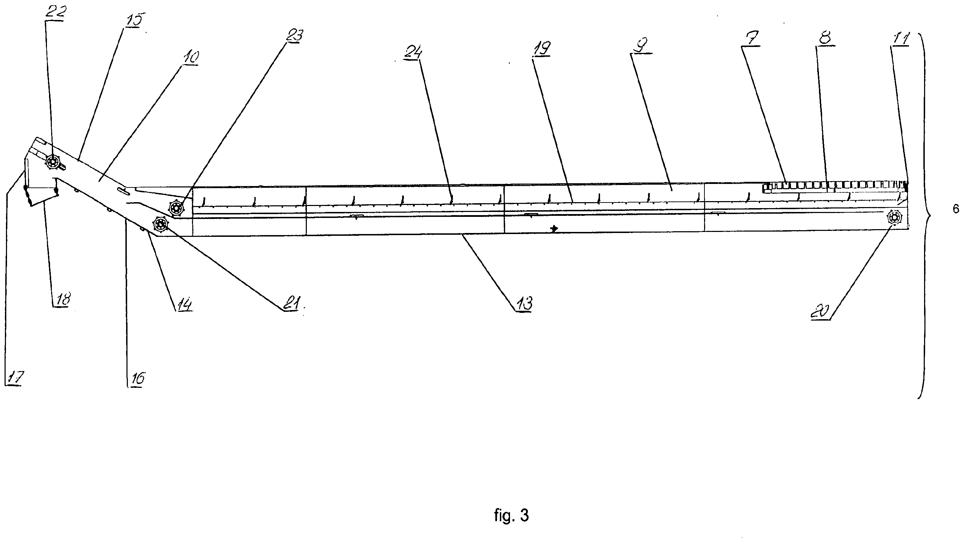

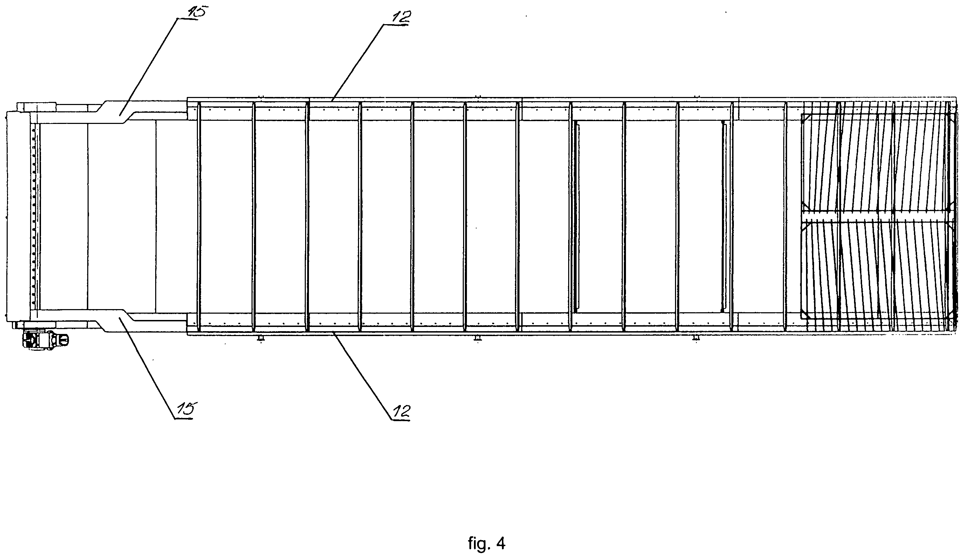

The advantage of the invention is a combination of two cutting technologies - water cutting and plasma cutting using a CNC controller with software that allows the control of two cutting tools while making one piece, as well as manufacturing the pieces, depending on the needs, using one cutting tool. This enables the execution of a piece with various planned precision, and also significantly reduces the time of manufacturing the part.
The exemplary embodiment of the cutting machine is shown in the drawing, in which Figure 1 presents the end view of the cutting machine, Figure 2 presents the front view of the cutting machine, Figure 3 shows the end view of the cutting machine's tub and Figure 4 shows the top view of the cutting machine's tub.

The exemplary embodiment of the cutting machine includes a portal (1), two carriages (2) slidably mounted on two longitudinal tracks (3). On the portal (1), slidably, the tool rest carriage is mounted on the crosswise track for attaching the waterjet head (4) and the tool rest carriage for mounting the plasma cutting torch (5). The cutting machine is fitted with conventional - not shown in the drawing - drive units: the portal's drive unit - designed for moving it along the longitudinal track, the tool rest carriages' drive units designed for moving them along the crosswise track, the tool heads' drive unit, separate for each of them designed for moving them crosswise to the axis of the portal. In addition, the cutting machine is equipped with a tub (6), with a grid (7) inside the tub and a slatted grille (8), which form a work table. The tub (6) is an open top tank, comprising a main tank (9), and a separator (10). The edges of the upper front wall (11) and side walls (12) of the main tank (9) are at the same height, and the bottom (13) of the main tank (9) is flat and placed horizontally. The main tank (9) passes into the separator (10), which comprises the bottom of the separator (14) and the separator's side walls (15), whose upper edges are parallel to the bottom of the separator (14). The screen (16) is embedded in the bottom of the separator (14) - above the upper edges of the walls of the main tank (9), and a throat (17) being the separator's outlet (10) is located above the screen (16). The throat (17) is fitted with an adjustable lid (18), which in the exemplary embodiment is in the form of a screen. The tub (6) is equipped with a cleaning device and the conventional water level control system - not shown in the drawing. The cleaning device consists of a scraping system and a separation system. The scraping system includes: a scraping strip (19) - which is formed by a series of scraper elements (24) fixed on longitudinal chain guides, which are driven in a closed loop by: lower return wheels (20), lower intermediate wheels (21), upper return wheels (22), upper intermediate wheels (23). All wheels (20)-(23) are mounted on the axles in the side walls of the tub. The scraping system is equipped with the conventional drive unit, which is not shown in the drawing. After activating the scraping strip the scraper elements (24) move the waste collected at the bottom (13) of the main tank (9), along the bottom from the lower return wheels (20), towards the lower intermediate wheels (21), then along the bottom of separator (14) through the screen (16) into the throat (17) with the lid (18). The screen (16) is the first level of separation - this is where fine waste (sand) is extracted, and the throat (17) with the lid (18) is the second stage of the separation system, from which the remaining part of the waste is directed through the lid (18) to a container not shown in the drawing; when the waste passes through the lid (18) water is drained from the waste; this water is returned to the process or directed outside. The water level control device is a system comprising the conventional controller, which enables the selection of the force of the water inflow/outflow stream into the tub, so that the water level in the tub is maintained at a height selected for the currently ongoing technological process. The cutting machine is fitted with a CNC controller - for controlling all operations, which take place in the process of cutting every piece - i.e. the movement of tools and cutting parameters. The cutting machine is used in a conventional manner in the process of cutting pieces out of various materials.

## Claims

1. The portal cutter containing two carriages, designed for moving the portal, which are mounted slidably on two longitudinal tracks located parallel to each other, which is equipped with the portal's drive unit, and the portal is equipped with crosswise tracks designed for mounting the tool rest carriage, and furthermore, it is fitted with a work table embedded in a tub and provided with a CNC controller for process control wherein on the portal (1) the tool rest carriage for attaching the waterjet head (4) and a tool rest carriage for mounting a plasma cutting torch (5) are mounted slidably on the crosswise track, the tub (6) of the cutting machine has a grid (7) and a slatted grille (8), which form a work table; furthermore, the cutting machine is provided with two technological systems, one designed for creating and shaping the stream of water and one for creating and shaping plasma, **characterized in that** each of the tool rest carriages is provided with a separate drive unit and **in that** the computer controller is equipped with CNC software for controlling one or two cutting tools in the process of manufacturing one piece and all operations which take place in the process of cutting every piece - i.e. the movement of tools and the cutting parameters.

2. The cutting machine as defined in claim no. 1 **characterized in that** the tub (6) is an open top tank, comprising a main tank (9) and a separator (10), where the upper edges of the front wall (11) and side walls (12) of the main tank (9) are at the same height, and the bottom (13) of the main tank (9) is flat and horizontal, In addition, the main tank (9) passes into the separator (10) containing the bottom of the separator (14) and side walls of separator (15), whose upper edges are parallel to the surface of the bottom separator (14); furthermore, a screen (16) is embedded in the bottom of the separator (14) -above the upper edges of the walls of the main tank (9); the throat (17) being the separator outlet (10) is positioned above the screen (16); this throat (17) is fitted with an adjustable lid (18), preferably in the form of drainage screen; the tub (6) is equipped with a cleaning device and a conventional water level control system, which is fitted with a conventional drive unit - consists of scraping system that includes: a scraping strip (19) - which Is formed by a series of scraper elements (24) fixed on longitudinal chain guides, which are driven in a closed loop by: lower return wheels (20), lower intermediate wheels (21), upper return wheels (22), upper intermediate wheels (23); all wheels (20)-(23) are mounted on the axles in the side walls of the tub, and the water level control system consists of a conventional system containing a conventional controller which enables the selection of the force of the water inflow/outflow stream into the tub (6), so that the water level in the tub is maintained at a height selected for the currently ongoing technological process.

## Patentansprüche

1. Portalschneidemaschine mit zwei für die Bewegung des Portals bestimmten und auf zwei parallel zueinander angeordneten Längsschienen verschiebbar befestigten Wagen, die mit der Antriebseinheit des Portals ausgestattet ist, und das Portal ist mit den für die Befestigung des Werkzeugaufnahmeschlittens bestimmten Querschienen ausgestattet und weiterhin ist sie mit einem in einer Wanne eingebetteten Arbeitstisch ausgestattet und mit einer CNC-Steuerung für die Prozesssteuerung versehen, wobei auf dem Portal (1) der Werkzeugaufnahmeschlitten zum Anbringen des Wasserstrahlkopfes (4) und ein Werkzeugaufnahmeschlitten zur Befestigung eines Plasmaschneidbrenners (5) verschiebbar auf der Querschiene befestigt sind, und wobei die Wanne (6) der Schneidemaschine über ein Gitter (7) und einen Lattenrost (8) verfügt, die einen Arbeitstisch bilden; weiterhin ist die Schneidemaschine mit zwei technologischen Systemen versehen, eines für die Erzeugung und Formung des Wasserstroms und eines für die Erzeugung und Formung von Plasma bestimmt, **dadurch gekennzeichnet, dass** jeder der Werkzeugaufnahmeschlitten mit einer separaten Antriebseinheit versehen ist und dass die Computersteuerung mit einer CNC-Software zur Steuerung von ein oder zwei Schneidwerkzeugen während des Fertigungsprozesses des Werkstücks und aller während des Schneidprozesses für alle Werkstücke durchgeführten Operationen, d. h. die Bewegung der Werkzeuge und die Schnittparameter, ausgestattet ist.

2. Schneidemaschine nach Anspruch 1, **dadurch gekennzeichnet, dass** die Wanne (6) ein aus einem Haupttank (9) und einem Abscheider (10) bestehender oben offener Tank ist, wobei die oberen Ränder der Vorderwand (11) und der Seitenwände (12) des Haupttanks (9) auf der gleichen Höhe liegen und der Boden (13) des Haupttanks (9) flach und horizontal ist; darüber hinaus geht der Haupttank (9) in den Abscheider (10) über, der den Boden des Abscheiders (14) und die Seitenwände des Abscheiders (15) enthält, deren obere Ränder parallel zur Oberfläche des Bodens des Abscheiders (14) verlaufen; ferner ist ein Sieb (16) im Boden des Abscheiders (14) über den oberen Rändern der Wände des Haupttanks (9) eingebettet; der Hals (17), der den Auslauf (10) des Abscheiders darstellt, befindet sich über dem Sieb (16); dieser Hals (17) ist mit einem verstellbaren Deckel (18) versehen, vorzugsweise in Form eines Entwässerungssiebes; die Wanne (6) ist mit einer Reinigungsvorrichtung und einer konventionellen Wasserstandsregelung ausgestattet, die mit einer konventionellen Antriebseinheit ausgerüstet ist - sie besteht aus einem Abstreifsystem, das folgendes umfasst: ein Abstreifband (19), das aus einer Reihe von Abstreiferelementen (24) gebildet wird, die an den Längsketteführungstücken befestigt sind, die in einem geschlossenen Kreislauf durch untere Umlenkräder (20), untere Zwischenräder (21), obere Umlenkräder (22), obere Zwischenräder (23) angetrieben werden; alle Räder (20) - (23) sind an Achsen in den Seitenwänden der Wanne befestigt, und die Wasserstandsregelung besteht aus einem konventionellen System, das eine konventionelle Steuerung enthält, die es ermöglicht, die Kraft des Wasserzulaufs bzw. -abflusses in die Wanne (6) so zu wählen, dass der Wasserstand in der Wanne auf der Höhe gehalten wird, die für den laufenden technologischen Prozess ausgewählt wurde.

## Revendications

1. Scie à portique contenant deux chariots, conçus pour déplacer le portail, qui sont montés coulissant sur deux rails longitudinaux situés parallèlement l'un à l'autre, qui est équipée de l'unité d'entraînement du portail, et le portail est équipé de rails transversaux conçus pour le montage du chariot porte-outils, et, en outre, il est équipé d'une table de travail incorporée dans une cuve et d'un contrôleur CNC pour assurer le contrôle du processus sur le portail (1); le chariot porte-outils pour attacher la tête à jet (4) d'eau et un chariot porte-outils pour le montage d'une torche (5) à plasma sont montés coulissant sur le rail transversal, la cuve (6) de le machine de découpe a une grille (7) et une grille caillebotis (8), qui forment une table de travail; en outre, le machine de découpe est fournie avec deux systèmes technologique, un conçu pour créer et mettre en forme le jet d'eau et l'autre pour créer et mettre en forme du plasma, caractéristique en ce que chaque des chariots porte-outils est fourni avec une unité d'entraînement séparée et en ce que l'ordinateur contrôleur est équipé d'un logiciel CNC pour contrôler un ou deux outils de coupe lors du processus de fabrication d'une pièce et toutes les opérations qui ont lieu dans le processus de coupe de chaque pièce - à savoir le mouvement des outils et les paramètres de coupe.

2. Machine de découpe selon la revendication 1, caractéristique en ce que la cuve (6) est une cuve ouverte en haut, contentant la cuve principale (9) et un séparateur (10), les bords supérieurs de la paroi avant (11) et les parois latérales (12) de la cuve principale (9) sont à la même hauteur, et le le fond (13) de la cuve principale (9) est plat et horizontal ; en outre, la cuve principale (9) passe dans le séparateur (10) contenant le fond du séparateur (14) et les parois latérales du séparateur (15), dont les bords supérieurs sont parallèles à la surface du séparateur inférieur (14); en outre, un tamis (16) est incorporé dans le fond du séparateur (14) - au-dessus des bords supérieurs des parois du réservoir principal (9); la gorge (17) étant la sortie (10) de séparateur est positionnée au-dessus du tamis (16); cette gorge (17) est munie d'un couvercle réglable (18), de préférence sous la forme d'un tamis de drainage; la cuve (6) est équipé d'un dispositif de nettoyage et d'un système conventionnel de contrôle du niveau d'eau, qui est équipé d'une unité d'entraînement conventionnelle - est compose d'un système de raclage qui comprend : une bande (19) de raclage- formée d'une série d'éléments (24) de raclage fixés sur des guides à chaîne longitudinaux, qui sont entraînés en boucle fermée par : roues de renvoi inférieures (20), roues intermédiaires inférieures (21), roues de renvoi supérieures (22), roues intermédiaires supérieures (23); toutes les roues (20) - (23) sont montées sur les essieux dans les parois latérales de la cuve, et le système de contrôle du niveau d'eau consiste en un système conventionnel contenant un contrôleur conventionnel qui permet la sélection de la force du jet d'eau d'entrée/sortie de la cuve (6), de sorte que le niveau d'eau dans la cuve soit maintenu à une hauteur choisie pour le processus technologique en cours.
